# EUROPEAN PATENT APPLICATION

(11) **EP 1 241 864 A1**
(43) Date of publication of application: **18.09.2002**
(21) Application number: 02004379.0
(22) Date of filing: 05.03.2002
(51) Int. Cl.: H04N 1/40, H04N 1/41

(54) **Image processing device and image reading apparatus using the image processing device**

(30) Priority: 15.03.2001 JP 2001073503
(71) Applicant: Ricoh Company Ltd., Tokyo 143-8555 (JP)
(72) Inventor: Nara, Wataru, c/oRicoh Company Ltd., Ohta-ku, Tokyo 143-8555 (JP)
(74) Representative: Schwabe - Sandmair - Marx

(57) **Abstract**

An image processing device includes a background part detecting device configured to detect from image data of an image, background part level data of the image data. An image memory stores the image data, and an inputting/outputting device inputs and outputs the image data into and from the image memory. A background part level data removing device removes the background part level data from the image data outputted from the image memory by the inputting/outputting device. An on/off device turns on and off a background part level data removing operation of the background part level data removing device according to an external control signal.

## Description

### BACKGROUND OF THE INVENTION

### Field of the Invention

The present invention relates to an image processing device and an image reading apparatus using the image processing device.

### Discussion of the Background

Japanese Patent Application Laid-open Publication No. 6-311359 discloses a background part removing device which removes from image data of an image, a portion of the image data below a threshold value as background part data of the image, after the image data has been processed with a shading correction process but before the image data is processed with an image processing process. The background part removing device not only removes the background part data from the image data, but also gradually changes the threshold value to reduce unnatural feeling of the image at a part thereof having the image density near that of the threshold value.

A background part removing function may be realized by detecting from analogue image data, background part level data of the image data with a peak-hold circuit, and by feeding back a value of the background level data to a reference value of an A/D converter.

The background part removing device of JP Application Laid-open Publication No. 6-311359 is configured to detect from image data after having been processed with a shading correction process, background part level data, and to remove from the image data a portion of the image data below a threshold value as background part data. Also, in the above-described technology of detecting background part level data of analogue image data with a peak-hold circuit and feeding back a value of the background part level data to a reference value of an A/D converter, a background part data removing process is applied to image data before being processed with image processing processes such as MTF correction, etc., i.e., to image data before being stored in a memory. Thus, the image data after having been processed with the background part data removing process is stored in a memory.

Accordingly, in a digital copying machine having a background part removing device having either of the above-described configurations, in the midst of repeatedly printing image data stored in a memory, the background part removing function cannot be switched from being turned on to being turned off and vice versa. In another word, in the above-described digital copying machine, for obtaining copies of an image of an original document with the background part removing function turned on in one case and with the background part removing function turned off in another case, a user needs to operate the digital copying machine to read the image again with an image reading mode set to a mode for removing a background part or to another mode for not removing the background part, as the case may be, which is inconvenient.

### SUMMARY OF THE INVENTION

The present invention has been made in view of the above-discussed and other problems and addresses the above-discussed and other problems.

Preferred embodiments of the present invention provide a novel image processing and/or reading apparatus that can obtain image data of an image with background part data of the image data removed or not removed without a need to read the image again.

The preferred embodiment of the present invention further provide a novel image processing device that stores image data of an image, attaching thereto background part data, in an image memory, so that a process of removing background part data can be applied to the image data outputted from the image memory.

The preferred embodiments of the present invention further provide a novel image processing device that easily detects an effect of image processing processes on background part data of image data at a downstream stage of the image processing processes.

According to a preferred embodiment of the present invention, an image processing device includes a background part detecting device configured to detect from image data of an image, background part level data of the image data. An image memory stores the image data, and an inputting/outputting device inputs and outputs the image data into and from the image memory. A background part level data removing device removes the background part level data from the image data outputted from the image memory by the inputting/outputting device. An on/off device turns on and off a background part level data removing operation of the background part level data removing device, preferably according to an external control signal.

The image processing device may further include an adding device configured to add the background part level data detected by the background part detecting device to the image data to be stored in the image memory.

In the image processing device, the adding device may be configured to add the background part level data to the image data at a part thereof in a main scanning direction.

According to another preferred embodiment of the present invention, an image reading apparatus includes an optical reading device configured to read image data of an image and an image processing device configured as described above.

According to another preferred embodiment of the present invention, an image processing method includes the steps of detecting from image data of an image, background part level data of the image data; storing the image data in an image memory; outputting the image data from the image memory; removing the background part level data from the image data outputted from the image memory; and turning on and off a background part level data removing operation for the image data outputted from the image memory.

### BRIEF DESCRIPTION OF THE DRAWINGS

A more complete appreciation of the present invention and many of the attendant advantages thereof will be readily obtained as the same becomes better understood by reference to the following detailed description when considered in conjunction with accompanying drawings, wherein:
Fig. 1 is a block diagram illustrating electrical connection of a digital copying machine according to a preferred embodiment of the present invention;
Fig. 2 is a block diagram of a background part detecting device of the digital copying machine;
Fig. 3 is a block diagram of a background part removing device of the digital copying machine;
Fig. 4 is a timing chart for explaining a process of the digital copying machine;
Fig. 5 is a table for explaining a process of the background part removing device; and
Figs. 6(1A), 6(1B), 6(2B), 6(2C), 6(3A) and 6(3B) are diagrams for explaining a process of the digital copying machine.

### DETAILED DESCRIPTION OF THE PREFERRED EMBODIMENTS

Referring now to the drawings, wherein like reference numerals designate identical or corresponding parts throughout the several views, preferred embodiments of the present invention are described.

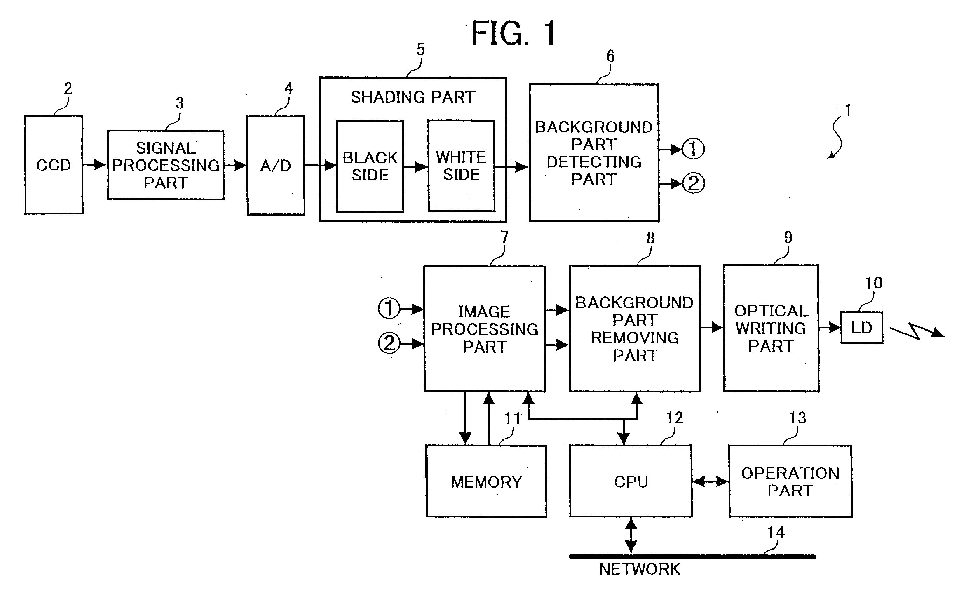

Fig. 1 is a block diagram illustrating electrical connection of a digital copying machine 1 according to a preferred embodiment of the present invention. In the digital copying machine 1, image data of an image of an original document, photo-electrically converted from an optical image of the image by a CCD 2 as a photo-electrical converting element, is processed by a predetermined signal process at a signal processing part 3, and is then converted from analogue data to digital data by an A/D converter 4. A shading part 5 then performs shading correction processes for the black side and the white side on the digital data, so that image data Drd0, in which illumination variation, and sensitivity variation of the CCD 2 have been corrected, is outputted. The image data Drd0 is inputted into a background part detecting device 6 so that background part level data of the image data Drd0 is detected. An image processing part 7 performs onto image data a MTF correction process, a filtering process, a magnification changing process, and a γ conversion process. A background part level data removing part 8 functioning as a background part level data removing device removes background part level data of image data. Image data after having been processed with the above-described processes is modulated at an optical writing part 9, and is converted to an exposure beam according to the image data by a laser diode 10, and the image is electrophotographically formed by the exposure beam. An image memory 11 stores image data processed by the image processing part 7. A CPU 12 controls each part of the digital copying machine 1. An operation part 13 receives various operating instructions from a user. The digital copying machine 1 is connected with a network 14, such as a LAN, via a predetermined interface.

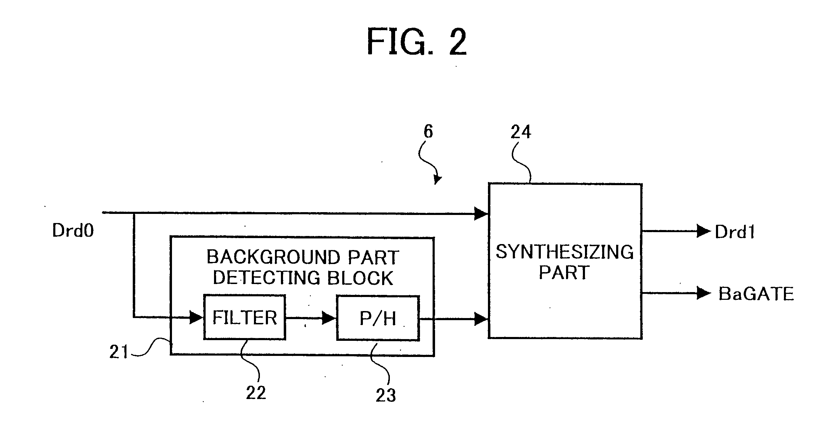

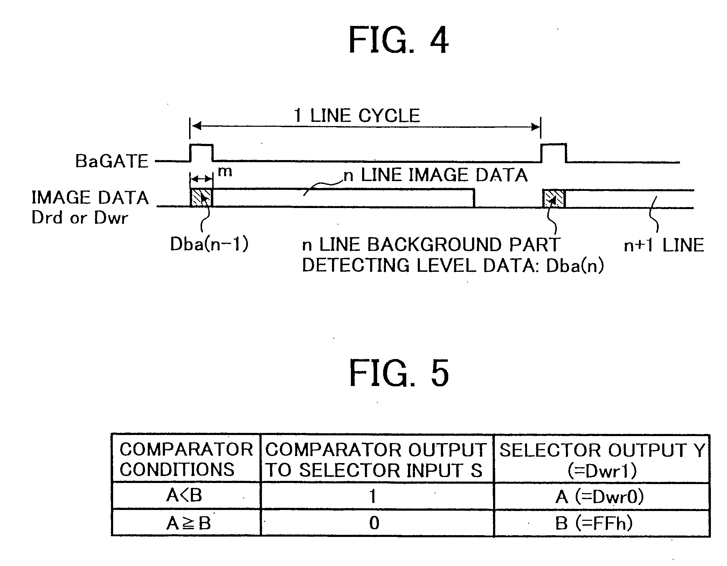

As illustrated in Fig. 2, at the background part detecting device 6, if a background part removing mode is set, a background part detecting block 21 functioning as a background part detecting device detects background part level data Dba from the image data Drd0 after having been processed with the shading correction processes. A synthesizing part 24 serving as an adding device adds the background part level data Dba for "m" picture elements to image data of a following line at the forefront thereof in a main scanning direction so as to be image data Drd1 (see Fig. 4), and outputs the image data Drd1 to the image processing part 7 at the next step. The background part detecting device 6 outputs at the same time a gate signal BaGATE indicating a position in the image data where the background part level data Dba is attached.

In the background part detecting block 21, a filter 22 applies a filtering process for smoothing image data to the image data Drd0 to remove a noise effect, and thereafter a peak-hold circuit 23 peak-holds the image data Drd0, so that the background part level data Dba is precisely detected.

By making the background part level data Dba to a size for "m" picture elements, which is larger than a size of a filter of the image processing part 7 at a subsequent step, the background part level data Dba is not changed at a center part thereof, asserted with the gate signal BaGATE, by an effect of data outside of the gate of the gate signal BaGATE, and thereby background density information is kept to be stored in the image memory 11.

In the embodiment, a method of using the gate signal BaGATE is used as described above for identifying a background part level data area of image data. A similar effect can be obtained by fixing the size of background part level data, e.g., the number of picture elements, to be added at the forefront of image data in advance. However, by identifying a background part level data area of image data with a gate signal, even when the size of a filter of the image processing part 7 differs between models, an algorithm for detecting background part level data at the image processing part 7 needs not be changed according to the size of the filter of the image processing part 7. Accordingly, a common algorithm for detecting background part data can be used at the image processing part 7 and the background part removing device 8. Therefore, in this embodiment, the method of outputting the gate signal BaGATE is used.

The outputted image data Drd1 is stored in the image memory 11 by the image processing part 7 serving as an inputting/ outputting device.

When printing out the image data Drd 1, the image data Drd1 is read out from the image memory 11, and based upon information inputted from the operation part 13 or a host computer connected with the network 14 and in accordance with an instruction from the CPU 12, the image processing part 7 performs necessary image processing processes (e.g., MTF correction, magnification changing, γ conversion, etc.) and the background part level data removing device 8 performs a background part removing process on the image data Drd1.

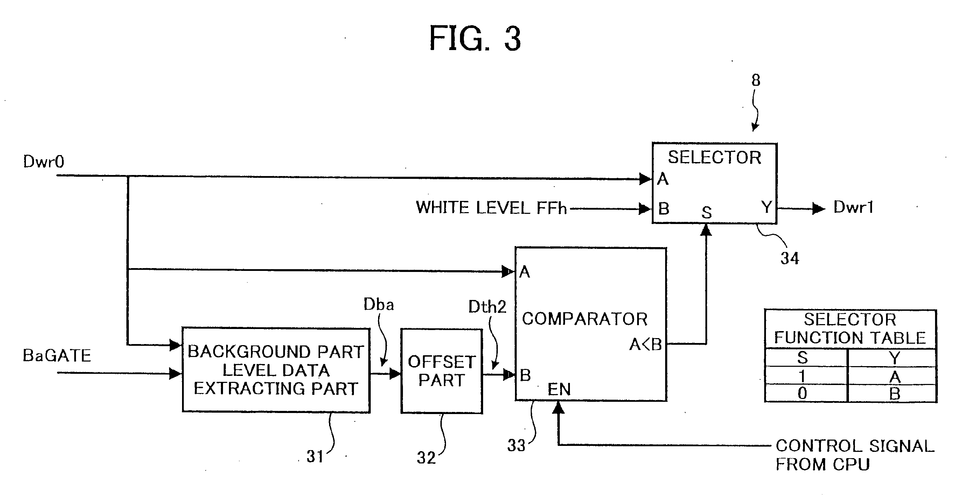

As illustrated in Fig. 3, in the background part level data removing device 8, a background part level data extracting part 31 detects from image data Dwr and the gate signal BaGATE read out from the image memory 11, background part level data Dba' after having been processed with the image processing processes. Here, if the background part level data Dba' itself is set as a threshold value Dth1' for discriminating background part level data from image data, a part of the background part level data Dba', corresponding to background noise caused by an effect of the image processing processes, may be outputted as image data. Accordingly, for avoiding the part of the background level data Dba', corresponding to background noise caused by an effect of the image processing processes, from being outputted as image data, one of the following operations is performed at an offset part 32 to obtain another threshold value Dth2;
1. Subtracting predetermined data for offsetting, i.e., Dth2=Dth1'-offsetting data,
2. Subtracting a predetermined ratio of image data, i.e., Dth2 = Dth1'x(1-α),
3. Combining the above-described operations 1 and 2, i.e., Dth2=Dthl'x(1-α)-offsetting data.

Thereafter, the threshold value Dth2 obtained as above and the image data Dwr are inputted into terminals A and B of a comparator 33, respectively, and by controlling the comparator 33 according to the conditions as indicated by a table of Fig. 5, background part level data of image data is removed.

Specifically, by controlling an EN terminal of the comparator 33 with a control signal from the CPU 12, the control signal is controlled to be at a H level where a comparator function of the comparator 33 is turned on (i.e., a background removing mode is set) or at an L level where the comparator function is turned off so that an outputting level of the comparator 33 is fixed to the H level (i.e., the background removing mode is released). Thereby, image data Dwr1 in which background part level data has been removed or image data Dwr1 in which background part level data has not been removed can be selectively outputted from a selector 34. Thus, turning on or off a background part removing function for image data is controlled by the CPU 12.

Furthermore, as described above, the background part level data removing part 8 is arranged downstream of the image memory 11. Thereby, switching between turning on and off the background part level data removing function is realized without a need of reading an image of an original document again. This switching operation can preferably, also be initiated by an external control signal or by a control signal issued on the basis of an internal decision. This decision can depend on scanned features of the images and/or processed features, e.g. like values of gamma (γ) or an other particularity of scanned and/or processed images or image data.

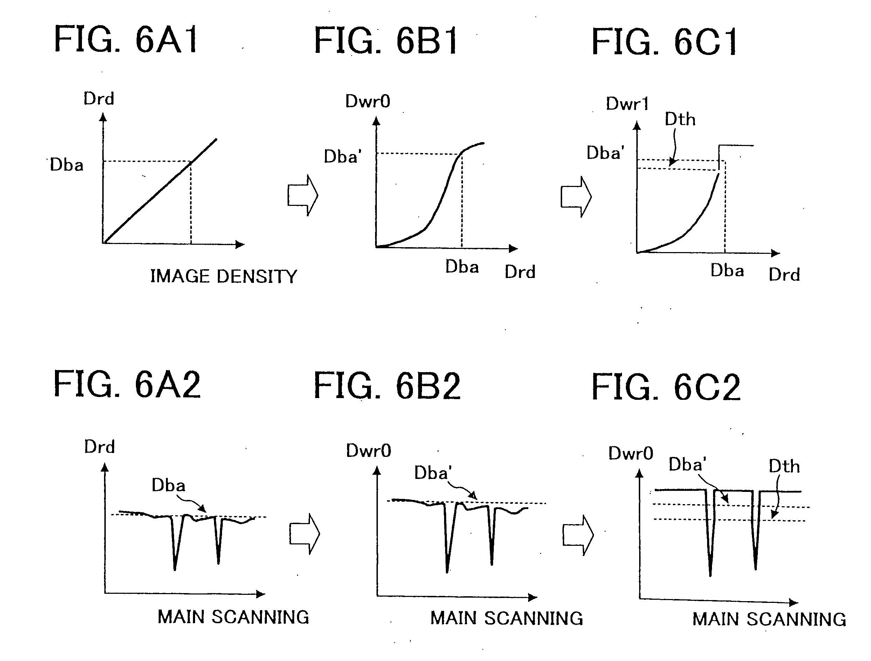

Now, referring to Figs. 6(A1), 6(A2), 6(B1), 6(B2), 6(C1) and 6(C2), a background part level data removing function is described in relation to changes in the gamma (γ) and image data of an image.

The image data Drd which has been read has the characteristics indicated by the diagrams illustrated in Figs. 6(A1) and 6(A2). Fig. 6(A1) illustrates the γ characteristics of image information (image density) of an image of an original document and of the image data Drd, and Fig. 6(A2) illustrates the image data Drd viewed in the main scanning direction, in which the background part level data Dba is added.

The image data Drd is thereafter processed with MTF correction and γ conversion processes by the image processing part 7 so as to have the characteristics indicated by the diagrams of Figs. 6(B1) and 6(B2). Fig. 6(B1) illustrates the γ characteristics of the image data Drd and the image data Dwr0 after having been processed with the image processing processes, and Fig. 6(B2) illustrates the image data Dwr0 after having been processed with the image processing processes, in which the background part level data Dba' is added.

From these Figs. 6(A1), 6(A2), 6(B1) and 6(B2), it can be understood that the gamma γ has been converted, the background part level data has been changed, and the image information (image density) has been changed.

The image data Dwr1 having been processed with the background part level data removing process has the characteristics indicated by the diagrams of Figs. 6(C1) and 6(C2). Fig. 6(C1) illustrates the γ characteristics of the image data Drd and the image data Dwr1 after having been processed with the background part level data removing process, and Fig. 6(C2) illustrates the image data Dwr1 after having been processed with the background part level data removing process, viewed in the main scanning direction, in which the threshold value Dth level data is added. From Figs. 6(C1) and 6(C2), it can be understood that the background part level data has been removed and the image information has been kept stored.

In the image processing part 7, if the γ conversion process is performed at an earlier stage of image processing processes at the image processing part 7, e.g., before a MTF correction process, because the gamma γ may be changed by the MTF correction process, the γ conversion process needs to be performed again after the MTF correction process. Accordingly, the image processing part 7 may be configured such that the γ conversion process is performed at the last stage in the image processing processes at the image processing part 7 for avoiding the γ conversion process from being repeatedly performed.

Further, it is widely practiced to change the order of performing various image processing processes in accordance with an image forming mode or a magnification ratio. Accordingly, depending upon various conditions, e.g., image forming modes, the order of performing the function of the background part removing device 8 can be exchanged with that of performing each function of the image processing part 7, so as to realize further increasing the image quality.

Numerous additional modifications and variations of the present invention are possible in light of the above teachings. It is therefore to be understood that within the scope of the appended claims, the present invention may be practiced otherwise than as specifically described herein.

The present application claims priority and contains subject matter related to Japanese Patent Application No. 2001-073503 filed in the Japanese Patent Office on March 15, 2001, and the entire contents of which are hereby incorporated by reference.

## Claims

1. An image processing device, comprising:
a background part detecting device configured to detect from image data of an image, background part level data of the image data;
an image memory to store the image data;
an inputting/outputting device configured to input and output the image data into and from the image memory;
background part level data removing device configured to remove the background part level data from the image data output from the image memory by the inputting/outputting device; and
an on/off device configured to turn on and/or off a background part level data removing operation of the background part level data removing device in particular according to a control signal.

2. The image processing device according to Claim 1, further comprising:
an adding device configured to add the background part level data detected by the background part detecting device to the image data to be stored in the image memory.

3. The image processing device according to Claim 2,
wherein the adding device is configured to add the background part level data to the image data at a part thereof in a main scanning direction.

4. An image processing device according to one of claims 1 to 3, comprising:
an optical reading device configured to read image data of an image, the image data being transferable to be processed in the image processing device.

5. A method of image processing, comprising the steps of:
detecting from image data of an image, background part level data of the image data;
storing the image data in an image memory;
outputting the image data from the image memory;
removing the background part level data from the image data output from the image memory; and
turning on and/or off a background part level data removing operation for the image data output from the image memory.

6. The image processing method according to Claim 5, further comprising the step of:
adding the background part level data detected in the background part level data detecting step to the image data to be stored in the image memory in the image data storing step.

7. The image processing method according to Claim 6,
wherein in the adding step, the background part level data is added to the image data at a part thereof in a main scanning direction.

8. The image processing method according to one of claims 5 to 7, further comprising the step of reading the image data of the image.

9. The image processing method according to one of claims 5 to 8, wherein the step of turning on and/or off a background part level data removing operation for image data is controlled preferably by an external control signal.
